# EUROPÄISCHE PATENTANMELDUNG

(11) **EP 2 712 526 A1**
(43) Veröffentlichungstag der Anmeldung: **02.04.2014**
(21) Anmeldenummer: 13401097.4
(22) Anmeldetag: 29.08.2013
(51) Int. Cl.: A47J 27/024, F24C 7/08

(54) **Garsystem**

(30) Priorität: 28.09.2012 DE 102012109204
(71) Anmelder: Miele & Cie. KG, 33332 Gütersloh (DE)
(72) Erfinder: Sillmen, Ulrich, 33332 Gütersloh (DE)

(57) **Zusammenfassung**

Garsystem (1) und Verfahren zum Betreiben eines solchen Garsystems mit einer eine Heizquelle (2) umfassenden Gareinrichtung und mit einem Gargutbehälter 4) zur Aufnahme und Behandlung von Gargut. Der Gareinrichtung sind eine Steuereinrichtung (5) zur Steuerung der Heizquelle und eine Sensoreinrichtung (6) zur Erfassung charakteristischer Werte für Temperaturen zugeordnet. Dabei umfasst der Gargutbehälter (4) eine einen Hohlraum (7) aufweisende Wärmeübertragungseinrichtung (8). Die Wärmeübertragungseinrichtung (8) ist zur Wärmeübertragung zwischen einem Bereich einer inneren Wandung (14) des Gargutbehälters (4) und einem Bereich einer äußeren Wandung (24) des Gargutbehälters ausgebildet. Der Hohlraum (7) ist wenigstens teilweise als thermoakustischer Wärmeuberträger 9) und/oder wenigstens teilweise als ein Wärmerohr ausgebildet. Die Sensoreinrichtung (6) ist dazu geeignet und ausgebildet, charakteristische Werte für Temperaturen des Bereichs der äußeren Wandung des Gargutbehälters zu erfassen. Die Steuereinrichtung (5) ist dazu geeignet und ausgebildet, die Heizquelle (2) in Abhängigkeit der von der Sensoreinrichtung (6) erfassten charakteristischen Werte zu steuern.

## Beschreibung

Die vorliegende Erfindung betrifft ein Garsystem und ein Verfahren zum Betreiben eines Garsystems.

Viele Hausgeräte verfügen heutzutage über Automatikfunktionen, welche dem Benutzer die Bedienung vereinfachen und komplexe Aufgaben ohne weitere Betreuung durchführen können. Beispielsweise erlauben die Automatikprogramme moderner Gargeräte eine schmackhafte Zubereitung verschiedenster Speisen, ohne dass der Benutzer den Garvorgang beobachten oder bestimmte Gerätefunktionen zu- oder umschalten muss.

Voraussetzung für einen solchen Automatikbetrieb ist mitunter eine genaue Erfassung verschiedener Parameter, welche für den Garvorgang charakteristisch sind, wie z. B. die Temperatur in einem Garraum oder die eines Garguts. In Abhängigkeit der erfassten Parameter werden in der Regel durch die Automatikfunktion bestimmte Einrichtungen des Gargerätes gesteuert bzw. reguliert, wie beispielsweise eine Heizquelle. Die Heizquelle muss dabei entsprechend der Art der Zubereitung und des verwendeten Gargutes reguliert werden, um z. B. eine Überhitzung des Gargutes zu vermeiden. Somit ist die Genauigkeit der erfassten Parameter entscheidend für die Qualität der zubereiteten Speisen und ein wichtiges Merkmal eines Gargerätes mit Automatikfunktionen.

Die genaue Erfassung der Temperatur bei Gar- und Kochvorgängen ist jedoch technisch anspruchsvoll. Besonders aufwendig ist die Bestimmung der Temperatur von Gargut, welches in einem Topf zubereitet wird. Im Stand der Technik sind Vorrichtungen bekannt geworden, welche die Temperatur an einem Kochtopf berührungslos erfassen. Meistens ist dazu ein Sensor vorgesehen, welcher die Temperatur an der Außenseite des Kochtopfes erfasst.

Nachteilig an dieser Art der Temperaturerfassung ist jedoch, dass die an der Außenseite des Kochtopfes erfasste Temperatur meistens nicht mit der Temperatur des Garguts im Kochtopf übereinstimmt. Beispielsweise kann an der Außenseite des Kochtopfes eine Temperatur von 100 °C vorliegen, während das Gargut diese Temperatur noch lange nicht erreicht hat. Daher ist diese Art der Temperaturerfassung für die Verwendung bei Automatikfunktionen nicht zufriedenstellend.

Zudem ist bei der Zubereitung von Speisen in Kochtöpfen die Temperatur an der Innenseite des Topfbodens ein sehr wichtiger Parameter, da diese Temperatur insbesondere entscheidend für das Anbrennen von Speisen ist. Jedoch ist eine zufriedenstellende Ermittlung der Temperatur am Topfinnenboden bei Gargeräten bislang nicht möglich. Eine bekannt gewordene Möglichkeit ist, die Topfinnentemperatur von der gemessenen Topfaußentemperatur herzuleiten. Dieses Verfahren ist meistens sehr ungenau, da viele oft unbekannte Faktoren berücksichtigt werden müssen, wie z. B. das Topfmaterial.

Es ist daher die Aufgabe der vorliegenden Erfindung, ein Garsystem zur Verfügung zu stellen, bei welchem die Temperatur im Innenbereich eines Gargutbehälters zuverlässig ermittelbar ist.

Diese Aufgabe wird gelöst durch ein Garsystem mit den Merkmalen des Anspruchs 1 und ein Verfahren zum Betreiben eines solchen Garsystems mit den Merkmalen des Anspruchs 11. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Das erfindungsgemäße Garsystem weist wenigstens eine wenigstens eine Heizquelle umfassende Gareinrichtung und wenigstens einen Gargutbehälter zur Aufnahme und Behandlung von Gargut auf. Der Gareinrichtung sind wenigstens eine Steuereinrichtung zur Steuerung der wenigstens einen Heizquelle und wenigstens eine Sensoreinrichtung zur Erfassung charakteristischer Werte für Temperaturen zugeordnet. Der Gargutbehälter umfasst dabei wenigstens eine wenigstens einen Hohlraum aufweisende Wärmeübertragungseinrichtung. Die Wärmeübertragungseinrichtung ist zur Wärmeübertragung zwischen wenigstens einem Bereich einer inneren Wandung des Gargutbehälters und wenigstens einem Bereich einer äußeren Wandung des Gargutbehälters ausgebildet. Die Sensoreinrichtung ist dazu geeignet und ausgebildet, charakteristische Werte für Temperaturen des Bereichs der äußeren Wandung des Gargutbehälters zu erfassen. Die Steuereinrichtung ist dazu geeignet und ausgebildet, die Heizquelle in Abhängigkeit der von der Sensoreinrichtung erfassten charakteristischen Werte zu steuern.

Das erfindungsgemäße Garsystem hat viele Vorteile. Ein erheblicher Vorteil ist, dass das Garsystem einen Gargutbehälter mit wenigstens einer Wärmeübertragungseinrichtung umfasst, welche wenigstens einen Hohlraum aufweist und der Hohlraum zwischen wenigstens einem Bereich einer inneren Wandung und wenigstens einem Bereich einer äußeren Wandung des Gargutbehälters ausgebildet ist. Eine solche Wärmeübertragungseinrichtung mit einem Hohlraum ermöglicht eine besonders effiziente Wärmeübertragung zwischen einer Außenseite und einer Innenseite des Gargutbehälters. Das ermöglicht ein besonders gleichmäßiges Erhitzen des Gargutes im Gargutbehälter. Insbesondere bei größeren Pfannen und Brätern ist ein gleichmäßiges Braten wünschenswert und nützlich.

Besonders vorteilhaft ist, dass aufgrund der Wärmeübertragungseinrichtung die Temperaturen innen und außen am Gargutbehälter sehr ähnlich und vorzugsweise im Wesentlichen übereinstimmend sind. Dadurch kann die Innentemperatur des Gargutbehälters einfach bestimmt werden, indem die Sensoreinrichtung charakteristische Werte für Temperaturen des Bereichs der äußeren Wandung des Gargutbehälters erfasst. Eine solche Bestimmung der Innentemperatur des Gargutbehälters ist sehr vorteilhaft zum Betreiben der Gareinrichtung einsetzbar, z. B. für Automatikfunktionen, bei denen ein bestimmter Temperaturbereich im Gargutbehälter über einen gewünschten Zeitraum eingehalten werden soll.

Ebenfalls vorteilhaft ist, dass eine Steuereinrichtung vorgesehen ist, die dazu geeignet und ausgebildet ist, die Heizquelle in Abhängigkeit der von der Sensoreinrichtung erfassten charakteristischen Werte zu steuern. Beispielsweise kann die Heizquelle dadurch so gesteuert werden, dass eine von einem Benutzer eingestellte Temperatur im Inneren des Gargutsbehälters nicht überschritten wird. So kann z. B. Milch bis zu einer bestimmten Temperatur erhitzt werden, ohne dass die Milch zu heiß wird und überkocht.

Vorzugsweise ist der Hohlraum wenigstens teilweise zwischen dem Bereich der inneren Wandung und dem Bereich der äußeren Wandung des Gargutbehälters angeordnet. Insbesondere grenzt der Hohlraum an die innere und/oder die äußere Wandung an. Der Hohlraum kann dabei wenigstens teilweise von der inneren Wandung und/oder der äußeren Wandung des Gargutbehälters gebildet und/oder umgeben sein. Der Hohlraum kann auch wenigstens teilweise von wenigstens einem Bereich umgeben sein, welcher zwischen der inneren und der äußeren Wandung angeordnet ist. Die den Hohlraum umgebenden Wandungen können aus wenigstens zwei unterschiedlichen Materialien gebildet sein. Es können auch zwei oder mehr Hohlräume in einem Gargutbehälter vorgesehen sein.

Möglich ist auch, dass der Hohlraum in einem separaten Hohlkörper angeordnet ist, welcher wenigstens eine eigene Wandung aufweist. Der Hohlkörper ist insbesondere dazu geeignet und ausgebildet, Wärme zu übertragen. Möglich ist dabei ein beliebig gestalteter Körper mit wenigstens einem Hohlraum. Möglich sind auch mehrere Hohlkörper, welche insbesondere derart miteinander verbunden sind, dass ein wenigstens teilweise zusammenhängender Hohlraum gebildet wird. Der Hohlkörper ist insbesondere so ausgebildet und/oder angeordnet, wie für den Hohlraum beschrieben.

Der Hohlraum kann wenigstens teilweise im Bereich des Bodens und/oder im Bereich wenigstens einer Seitenwand des Gargutbehälters angeordnet sein. Eine Anordnung des Hohlraums bzw. der Wärmeübertragungseinrichtung im Boden und im Bereich einer Seitenwand ist besonders vorteilhaft, da die Temperaturen am Topfboden und im Bereich der Seitenwand sehr ähnlich sind. Die für die Steuerung der Heizquelle wichtige Temperatur des Topfbodens kann dadurch am leicht zugänglichen Bereich der Seitenwand über die Sensoreinrichtung zuverlässig ermittelt werden.

Der Hohlraum ist insbesondere gasdicht verschlossen.

Vorzugsweise weist der Hohlraum wenigstens bei Wohnraumtemperatur einen Innendruck auf, der geringer als der Umgebungsdruck ist. Im Hohlraum kann auch wenigstens eine Stützeinrichtung und/oder Verstrebung oder dergleichen zur Stabilisierung insbesondere bei der Evakuierung und/oder beim Befüllen vorgesehen sein.

Der Hohlraum kann mit wenigstens einem Medium wenigstens teilweise gefüllt sein. Es kann eine den Hohlraum begrenzende Wandung mit wenigstens einem Medium beschichtet sein. Dabei kann das Medium wenigstens teilweise zur Wärmeleitung bzw. Konduktion und/oder zur Wärmeströmung bzw. Konvektion geeignet und einsetzbar sein.

Besonders bevorzugt ist der Hohlraum wenigstens teilweise als thermoakustischer Wärmeüberträger und/oder wenigstens teilweise als ein Wärmerohr ausgebildet.

Der thermoakustische Wärmeüberträger ist bevorzugtermaßen wenigstens teilweise Wärme leitend mit dem Bereich der inneren Wandung und dem Bereich der äußeren Wandung des Gargutbehälters verbunden. Bei einer solchen Wärmeübertragungseinrichtung beruht die Wärmeübertragung auf dem sogenannten thermoakustischen Effekt, bei welchem Wärme wenigstens teilweise in Schwingungsenergie eines insbesondere gasförmigen Mediums umgewandelt werden kann. Die Schwingungsenergie kann übertragen und anschließend wenigstens teilweise wieder in Wärme umwandelt werden. Vorteilhaft ist, dass die Wärme mit einer besonders hohen Leistungsdichte übertragbar ist. Dadurch ist ein thermoakustischer Wärmeüberträger besonders effizient und wirtschaftlich.

Vorzugsweise umfasst der thermoakustische Wärmeüberträger wenigstens einen Hohlraum. Der Hohlraum ist im Wesentlichen gasdicht verschlossen und weist bei Raumtemperatur einen Druck auf, welcher geringer ist als der auf Meeresspiegelhöhe übliche Luftdruck. Vorzugsweise liegt der Druck unterhalb von 500 mbar und insbesondere zwischen 0,01 mbar und 200 mbar und besonders bevorzugt zwischen 0,1 mbar und 100 mbar. Andere Drücke sind möglich. Der Hohlraum ist insbesondere an den begrenzenden Innenwänden mit wenigstens einem Mittel wenigstens teilweise beschichtet. Vorzugsweise ist aus dieser Beschichtung, z. B. unter Wärmeeinfluss, ein gasförmiges Medium freisetzbar. Das freigesetzte Medium ist insbesondere zur Übertragung akustischer Wellen nach dem thermoakustischen Effekt geeignet.

Das Wärmerohr weist vorzugsweise wenigstens einen Hohlraum auf, welcher im Wesentlichen gasdicht verschlossen ist. Der Hohlraum kann dabei eine beliebige Gestalt und Ausdehnung aufweisen. Der Hohlraum ist vorzugsweise mit wenigstens einem Arbeitsmedium wenigstens teilweise gefüllt. Prinzipiell geschieht die Wärmeübertragung im Wesentlichen über Verdampfungs- bzw. Kondensationswärme des Arbeitsmediums. Das Wärmerohr ist vorzugsweise wenigstens teilweise Wärme leitend mit dem Bereich der inneren Wandung und dem Bereich der äußeren Wandung des Gargutbehälters verbunden.

Möglich ist eine Ausbildung des Wärmerohrs als ein sogenanntes Thermosiphon, bei welchem das kondensierte Arbeitsmedium im Wesentlichen durch Schwerkraft zum Bereich der Verdampfung zurückkehrt.

Möglich ist aber auch eine sogenannte Heatpipe, bei welcher das kondensierte Arbeitsmedium wenigstens teilweise durch Kapillarkraft zum Bereich der Verdampfung zurückkehrt. Dabei kann der Hohlraum im Wärmerohr wenigstens teilweise mit wenigstens einem Mittel ausgestaltet sein, welches eine geeignete Kapillarwirkung erzeugt, z. B. ein Kupferdrahtgewebe. Eine solche Heatpipe hat den Vorteil, dass das Arbeitsmedium unabhängig von der Lage des Wärmerohrs zum Verdampfungsbereich zurückgeführt wird. Dadurch bieten sich vielfältige Möglichkeiten für die Anordnung der Heatpipe in dem Gargutbehälter.

Besonders bevorzugt ist die Sensoreinrichtung zur Erfassung von Wärmestrahlung geeignet und ausgebildet. Dabei kann wenigstens ein Thermoelement oder dergleichen vorgesehen sein. Insbesondere sind mehrere Thermoelemente zu einer Thermosäule bzw. zu einem Thermopile hintereinander geschaltet. Möglich sind auch andere Einrichtungen zur berührungslosen Erfassung charakteristischer Werte für Temperaturen.

Die Sensoreinrichtung kann wenigstens ein Bauteil umfassen, welches seinen Widerstand in Abhängigkeit der Temperatur verändert. Es kann auch wenigstens ein Bauteil vorgesehen sein, welches ein elektrisches Signal in Abhängigkeit der Temperatur liefert. Es können auch weitere Sensoreinrichtungen, beispielsweise als Teil einer Sicherheitseinrichtung zum Schutz vor Überhitzung, vorgesehen sein. Möglich ist, dass die weiteren Sensoreinrichtungen mit der Sensoreinrichtung zur Erfassung charakteristischer Werte für Temperaturen wenigstens teilweise wirkverbunden sind.

Es ist möglich, dass die Sensoreinrichtung unterhalb des Gargutbehälters angeordnet ist. Die Sensoreinrichtung kann auch neben und/oder über dem Gargutbehälter angeordnet sein. Es können auch mehrere Sensoreinrichtungen an verschiedenen Stellen vorgesehen sein. Die Sensoreinrichtung kann wenigstens teilweise separat vorgesehen sein und beispielsweise über eine drahtlose Verbindung mit wenigstens einem anderen Teil der Sensoreinrichtung und/oder mit der Gareinrichtung bzw. der Steuereinrichtung wirkverbunden sein.

In einer bevorzugten Weiterbildung ist die Gareinrichtung als ein Kochfeld mit wenigstens einer beheizbaren Kochstelle ausgebildet. Das Kochfeld kann als Kochmulde, als ebenes Feld und/oder als Glaskeramik-Feld bzw. als sogenanntes Ceran-Feld oder dergleichen ausgebildet sein. Die Kochstelle weist insbesondere eine oder mehrere elektrische und/oder gasbetriebene Heizquellen auf. Vorzugsweise ist die Kochstelle auch als Induktionskochstelle und/oder als Halogenkochstelle ausgeführt.

Möglich ist, dass das Kochfeld mit wenigstens zwei, drei oder mehr Kochstellen vorgesehen ist. Besonders bevorzugt sind vier oder mehr Kochstellen in einem Kochfeld zusammen angeordnet. Ein Kochfeld kann auch nur eine Kochstelle umfassen oder aus einer solchen gebildet sein. Möglich ist auch ein Kochfeld, welches Bedien- und Steuereinrichtungen umfasst und/oder ein autarkes Kochfeld. Das Kochfeld kann auch als Teil eines Herdes bzw. Backofens ausgestaltet sein.

Das erfindungsgemäße Verfahren eignet sich zum Betreiben eines Garsystems mit wenigstens einer wenigstens eine Heizquelle umfassenden Gareinrichtung und mit wenigstens einem Gargutbehälter. Der Gareinrichtung sind wenigstens eine Steuereinrichtung zur Steuerung der wenigstens einen Heizquelle und wenigstens eine Sensoreinrichtung zur Erfassung charakteristische Werte für Temperaturen zugeordnet. Der Gargutbehälter umfasst wenigstens eine wenigstens einen Hohlraum aufweisende Wärmeübertragungseinrichtung. Dabei überträgt die Wärmeübertragungseinrichtung Wärme zwischen wenigstens einem Bereich einer inneren Wandung und wenigstens einem Bereich einer äußeren Wandung des Gargutbehälters. Die Sensoreinrichtung erfasst charakteristische Werte für Temperaturen des Bereichs der äußeren Wandung des Gargutbehälters. Die Steuereinrichtung steuert die Heizquelle wenigstens teilweise in Abhängigkeit der von der Sensoreinrichtung erfassten charakteristischen Werte.

Ein solches Verfahren bietet viele Vorteile. Ein erheblicher Vorteil ist, dass die Wärmeübertragungseinrichtung Wärme zwischen wenigstens einem Bereich einer inneren Wandung und wenigstens einem Bereich einer äußeren Wandung des Gargutbehälters mit hoher Effizienz überträgt. Dadurch sind die Temperaturen im an der inneren Wandung sehr ähnlich zu den Temperaturen an der äußeren Wandung des Gargutbehälters. Die Temperatur im Inneren des Gargutbehälters kann somit mit einer entsprechenden Genauigkeit von der Temperatur hergeleitet werden, welche durch die Sensoreinrichtung im Bereich der äußeren Wandung ermittelt wurde.

Besonders vorteilhaft ist auch, dass die Steuereinrichtung die Heizquelle wenigstens teilweise in Abhängigkeit der von der Sensoreinrichtung erfassten charakteristischen Werte steuert. Aufgrund der effizienten Wärmeübertragung zwischen Innen- und Außenseite des Gargutbehälters kann die Heizquelle dabei in Abhängigkeit einer Temperatur gesteuert werden, welche sehr ähnlich zu der Innentemperatur im Gargutbehälter ist. Ein solches Verfahren kann somit sehr vorteilhaft zur Steuerung von Garprozessen eingesetzt werden, bei denen enge Temperaturbereiche eingehalten werden müssen, wie beispielsweise beim Pochieren.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines erfindungsgemäßen Garsystems in einer geschnittenen Seitenansicht; und
- Figur 2: eine schematische Darstellung eines Ausführungsbeispiels eines Garsystems in einer geschnittenen Seitenansicht.

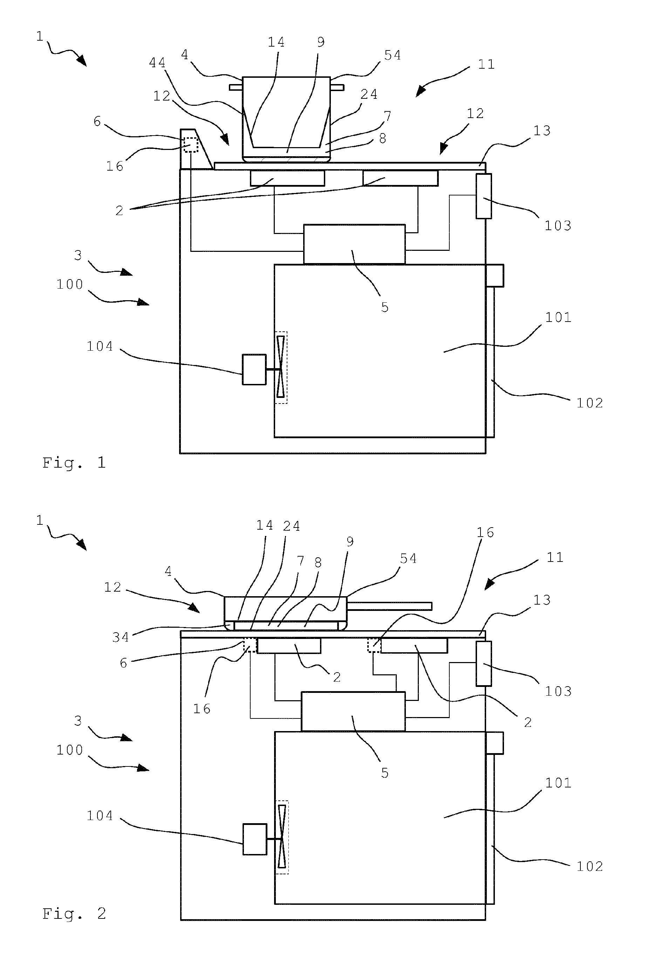

Die Figur 1 zeigt ein erfindungsgemäßes Garsystem 1 mit einer Gareinrichtung 3 und einem Gargutbehälter 4, welcher als Topf 54 ausgebildet ist. Die Gareinrichtung 3 umfasst ein Kochfeld 11 mit vier Kochstellen 12, von denen hier nur zwei Kochstellen 12 dargestellt sind. Das Kochfeld 11 ist mit einer Glaskeramikscheibe 13 ausgestattet. Unter der Glaskeramikscheibe 13 ist für jede Kochstelle 12 ist eine elektrische Heizquelle 2 vorgesehen. Die Heizquelle 2 kann dabei als Induktions-, Infrarot- sowie als Widerstandsheizquelle ausgebildet sein. Andere Arten von Heizquellen 2 sind möglich.

Die Gareinrichtung 3 ist hier als Teil eines Herdes 100 ausgeführt ist. Die Gareinrichtung 3 kann auch als autarkes Kochfeld 11 oder als Kochfeld 11 für ein Einbaugerät ausgebildet sein. Die Gareinrichtung 3 ist über die Bedieneinrichtung 103 des Herdes 100 bedienbar. Der Herd weist einen Garraum 101 auf, welcher mit einer Tür 102 verschlossen werden kann. Durch eine Umluftheizquelle 104 ist der Garraum 101 beheizbar. Weitere Heizquellen, wie ein Oberhitzeheizkörper und ein Unterhitzeheizkörper sowie eine Mikrowellenheizquelle oder eine Dampfquelle und dergleichen können vorgesehen sein.

Der Gareinrichtung 1 ist hier eine Sensoreinrichtung 6 zur Erfassung charakteristischer Werte für Temperaturen zugeordnet, welche mit der Steuereinrichtung 5 wirkverbunden ist. Es können mehrere Sensoreinrichtungen 6 und vorzugsweise für jede Kochstelle 12 wenigstens eine Sensoreinrichtung 6 vorgesehen sein. Weiterhin ist die Steuereinrichtung 5 mit der Bedieneinrichtung 103 und den Heizquellen 2 wirkverbunden. Die Steuereinrichtung 5 ist dazu geeignet und ausgebildet, die Heizquellen 2 in Abhängigkeit der von der Sensoreinrichtung 6 erfassten Werte zu steuern.

Die Sensoreinrichtung 6 ist hier so angeordnet, dass sie die charakteristischen Werte für Temperaturen eines Bereichs einer äußeren Wandung 24 des Topfs 54 erfasst. Dazu weist die Sensoreinrichtung 6 wenigstens einen Thermopile-Sensor 16 auf, welcher die vom Topf 54 ausgestrahlte Wärmestrahlung aufnimmt und in elektrische Energie umwandelt. Diese elektrische Energie kann von der Steuereinrichtung 5 zu einem Signal verrechnet werden, welches der Temperatur an der äußeren Wandung 24 des Topfes 54 entspricht. Die Steuereinrichtung 5 kann diese Temperatur mit einer vom Benutzer vorgegebenen Temperatur vergleichen und die Heizquelle 2 entsprechend steuern.

Der Topf 54 des Garsystems 1 ist hier mit einer Wärmeübertragungseinrichtung 8 ausgestattet. Die Wärmeübertragungseinrichtung 8 weist einen Hohlraum 7 auf und ist als ein thermoakustischer Wärmeüberträger 9 ausgebildet. Bei der Zubereitung von Speisen im Topf 54 mit eingeschalteter Heizquelle 2 kommt es zur Wärmeeinbringung in den thermoakustischen Wärmeüberträger 9. Der thermoakustische Wärmeüberträger 9 ist mit einer innenliegenden Beschichtung versehen, wobei die Beschichtung durch den Wärmeeintrag ein gasförmiges Medium freisetzen kann. Das gasförmige Medium wird durch den Wärmeeintrag in eine insbesondere hochfrequente Schwingung versetzt. An einer kühleren Stelle und insbesondere im Bereich der äußeren Wandung 24 können die Schwingungen wieder in Wärme umgesetzt werden. Durch eine solche nach dem thermoakustischen Prinzip ausgestaltete Wärmeübertragungseinrichtung 9 beträgt der Temperaturunterschied zwischen der inneren Wandung 14 und der äußeren Wandung 24 vorzugsweise nicht mehr als 2 K. Durch die gleichmäßige Wärmeverteilung ist ein solcher Topf 54 besonders gut zur Zubereitung von Speisen geeignet.

Der sehr geringe Temperaturunterschied zwischen der inneren Wandung 14 und der äußeren Wandung 24 ist auch bei der Erfassung der Temperatur von Vorteil. Die Sensoreinrichtung 6 erfasst die charakteristischen Werte für Temperaturen in einem Bereich einer äußeren Wandung 24 bzw. einer Seitenwand 44 des Topfs 54. Bei einem herkömmlichen Topf würde jedoch die Innentemperatur des Topfes stark von der erfassten Temperatur an der Außenwand abweichen und in der Regel höher bzw. wärmer sein. Durch die gleichmäßige Wärmeverteilung aufgrund der Wärmeübertragungseinrichtung 8 ist die außen erfasste Temperatur jedoch sehr ähnlich zu der Innentemperatur des Topfes 54.

Damit die Sensoreinrichtung 6 die Werte in dem Bereich erfassen kann, in welchem eine gleichmäßige Wärmeverteilung vorherrscht, erstreckt sich der der thermoakustische Wärmeüberträger 9 hier vom Boden 34 des Topfes bis zu einer gewissen Höhe der Seitenwand 44. Die Sensoreinrichtung 6 ist passend dazu oberhalb des Kochfeldes 11 angebracht und erfasst die Werte an der Seitenwand 44 des Topfes 54 auf Höhe der Wärmeübertragungseinrichtung 8.

Über die Bedieneinrichtung 103 kann ein Benutzer eine Programmwahl treffen bzw. eine Automatikfunktion wählen, welche die Heizquelle 2 entsprechend steuert. Beispielsweise möchte der Benutzer Gemüse in dem Topf 54 zubereiten, welches besonders schonend bei etwa 70 °C pochiert werden soll. Dazu wird über die Bedieneinrichtung 103 der gewünschte Soll-Temperaturwert bzw. ein Soll-Temperaturbereich eingestellt. Die Steuereinrichtung 5 vergleicht den Soll-Temperaturwert mit dem über die Sensoreinrichtung ermittelten Ist-Temperaturwert und steuert die Heizquelle 2 entsprechend an. So kann die Temperatur im Topf 54 automatisch entsprechend den Temperaturvorgaben des Benutzers gehalten werden. Eine ständige Beobachtung des Garguts ist somit auch bei sensiblen Garvorgängen nicht mehr nötig.

In Figur 2 ist ein ähnliches Garsystem 1 wie in Figur 1 dargestellt, jedoch ist hier für jede Kochstelle 12 eine Sensoreinrichtung 6 vorgesehen. Die Sensoreinrichtungen 6 sind unterhalb der Glaskeramikscheibe 13 angeordnet und erfassen charakteristische Werte für Temperaturen in einem Bereich einer äußeren Wandung 24 des Bodens 34 des Gargutbehälters 4. Um dort eine besonders gleichmäßige Wärmeverteilung zu erlangen, ist die Wärmeübertragungseinrichtung 8 im Boden 34 des Gargutbehälters 4 angeordnet.

Der Gargutbehälter 4 ist hier als eine Pfanne 64 mit einem thermoakustischen Wärmeüberträger 9 ausgebildet. Vorteilhaft an einer solchen Pfanne 64 ist, dass der thermoakustischen Wärmeüberträger 9 die Wärme im Wesentlichen dorthin abgibt, wo sich eine kühlere Stelle befindet. Beispielsweise kann beim Braten eine kühlere Stelle durch das Austreten von Flüssigkeit wie z. B. Fleischsaft entstehen. An dieser Stelle liegt dann nicht die notwendige Brattemperatur vor, wodurch eine gewünschte Bräunung des Garguts ausbleibt. Durch die Wärmeübertragungseinrichtung 8 werden vorteilhafterweise genau diese kühleren Stellen erwärmt und somit ein gleichmäßiges Bratergebnis erzielt. Diese Vorteile ergeben sich auch bei anderen Gargutbehältern 4 mit einer solchen Wärmeübertragungseinrichtung 8. Ebenso vorteilhaft kann auch ein entsprechend ausgebildetes Wärmerohr als Wärmeübertragungseinrichtung 8 in Gargutbehältern 4 eingesetzt werden.

Neben den hier beschriebenen können auch andere Arten und Ausgestaltungen von Gargutbehältern 4 mit Wärmeübertragungseinrichtungen 8 für das Garsystem 1 Verwendung finden. Bevorzugt sind Gargutbehälter 4, welche die Wärmeübertragungseinrichtung 8 so angeordnet haben, dass im Bereich der Erfassung durch die Sensoreinrichtung 6 eine besonders gute Wärmeübertragung zwischen der inneren Wandung 14 und der äußeren Wandung 24 stattfindet. Insbesondere findet zwischen der Innenseite des Bodens 34 des Gargutbehälters 4 und dem Bereich der Erfassung durch die Sensoreinrichtung 6 eine besonders gute Wärmeübertragung durch die Wärmeübertragungseinrichtung 8 statt. Besonders bevorzugt ist die Wärmeübertragungseinrichtung 8 wenigstens teilweise in dem Bereich angeordnet, in welchem die Sensoreinrichtung 6 charakteristische Werte für Temperaturen erfasst. Dabei kann vorgesehen sein, dass der Gargutbehälter 4 von einem Benutzer so ausgerichtet wird, dass die Wärmeübertragungseinrichtung 8 günstig zu der Sensoreinrichtung 6 positioniert ist. Vorzugsweise ist die Wärmeübertragungseinrichtung 8 aber so ausgestaltet und angeordnet, dass bei einer üblichen Position des Gargutbehälters 4 auf der Gareinrichtung 3 die Wärmeübertragungseinrichtung 8 günstig zu der Sensoreinrichtung 6 ausgerichtet ist.

In einer weiteren vorteilhaften, jedoch in den Figuren nicht dargestellten, Ausführungsform des Garsystems ist die Steuereinrichtung ausgebildet, wenigstens eine einer Kochstelle zugeordneten Heizquelle in Abhängig der von einer der Kochstelle zugeordneten Sensoreinrichtung erfassten charakteristischen Werte für Temperaturen im Bereich der Kochstelle, insbesondere im Bereich des Gargutbehälters, und in Abhängigkeit wenigstens eines weiteren Parameters zu steuern. Dieser wenigstens eine weitere, von der Steuereinrichtung berücksichtigte, Parameter kann zum Beispiel die von der Heizquelle abgegebene Leistung sein und/oder eine Kenngröße bzgl. des Gargutbehälters.

Unterstellt man beispielsweise, dass die Heizquelle im eingeschalteten Zustand mit ihrer angegebenen Leistung bzw. Nennleistung arbeitet, so kann die Steuereinrichtung bei einer getakteten Ansteuerung bereits aus der Länge der Ein- und Aus-Zeiten der Heizquelle auf die augenblickliche Heizleistung schließen. Auf diese Weise steht die Leistung der Heizquelle als weiterer Parameter für die Steuereinrichtung zur Verfügung, ohne dass hierfür eine zusätzliche Sensoreinrichtung erforderlich wäre.

In einer weiteren vorteilhaften, jedoch in den Figuren nicht dargestellten, Ausführungsform ist wenigstens einer Kochstelle neben wenigstens einer ersten Sensoreinrichtung, welche insbesondere als Thermopile-Sensor ausgebildet ist, wenigstens eine zweite Sensoreinrichtung zugeordnet, welche ebenfalls mit der Steuereinrichtung wirkverbunden ist, wobei die zweite Sensoreinrichtung ausgebildet ist, einen für die von der der Kochstelle zugeordneten Heizquelle abgegebene Leistung charakteristischen Wert zu erfassen. Auf diese Weise steht dank der zweiten Sensoreinrichtung die Leistung der Heizquelle als weiterer Parameter für die Steuereinrichtung zur Verfügung.

In einer weiteren vorteilhaften, jedoch in den Figuren nicht dargestellten, Ausführungsform ist in einer von der Steuereinrichtung umfassten oder mit der Steuereinrichtung in Wirkverbindung stehenden Speichereinrichtung wenigstens eine Kenngröße bzgl. des wenigstens einen Gargutbehälters abgelegt. Diese Kenngröße kann ein als weiterer Parameter dienen, der der Steuereinrichtung zur Verfügung steht bzw. der von der Steuereinrichtung berücksichtigt wird, um in Abhängigkeit davon die Heizquelle zu steuern. Bei der wenigstens einen Kenngröße des Gargutbehälters kann es sich um dessen Wanddicke, Wärmeleitfähigkeit und/oder Wärmeübergangskoeffizienten handeln.

Bei dem Verfahren zum Betreiben des Garsystems kann gemäß einer vorteilhaften Ausführungsform vorgesehen sein, dass die Steuereinrichtung die Heizquelle wenigstens teilweise in Abhängigkeit der von der Sensoreinrichtung erfassten charakteristischen Werte für Temperaturen und in Abhängigkeit wenigstens eines weiteren Parameters steuert. Bevorzugt ist dabei als weiterer Parameter die von der Heizquelle abgegebene Leistung und/oder eine Kenngröße bzgl. des Gargutbehälters vorgesehen.

In einer weiteren vorteilhaften Ausführungsform des Verfahrens zum Betreiben des Garsystems steuert die Steuereinrichtung die Heizquelle wenigstens teilweise in Abhängigkeit der von der Sensoreinrichtung erfassten charakteristischen Werte für Temperaturen und in Abhängigkeit der von der Heizquelle abgegebene Leistung. Dabei ermittelt die Steuereinrichtung die Leistung der Heizquelle basierend auf der Nennleistung der Heizquelle und der Länge der Ein- und Aus-Zeiten der Heizquelle während einer getakteten Ansteuerung der Heizquelle.

In einer weiteren vorteilhaften Ausführungsform des Verfahrens zum Betreiben des Garsystems steuert die Steuereinrichtung die Heizquelle wenigstens teilweise in Abhängigkeit der von der Sensoreinrichtung erfassten charakteristischen Werte für Temperaturen und in Abhängigkeit der von der Heizquelle abgegebene Leistung. Dabei ermittelt die Steuereinrichtung die Leistung der Heizquelle basierend auf einem Signal, das der Steuereinrichtung von einer weiteren Sensoreinrichtung bereitgestellt wird, die zuvor einen für die von der Heizquelle abgegebene Leistung charakteristischen Wert erfasst hat.

In einer weiteren vorteilhaften Ausführungsform des Verfahrens zum Betreiben des Garsystems steuert die Steuereinrichtung die Heizquelle wenigstens teilweise in Abhängigkeit der von der Sensoreinrichtung erfassten charakteristischen Werte für Temperaturen und in Abhängigkeit wenigstens einer Kenngröße bzgl. des Gargutbehälters. Dabei bezieht die Steuereinrichtung die wenigstens eine Kenngröße, bei der es sich um die Wanddicke, die Wärmeleitfähigkeit und/oder den Wärmeübergangskoeffizienten des Gargutbehälters handeln kann, aus einer von der Steuereinrichtung umfassten oder mit der Steuereinrichtung in Wirkverbindung stehenden Speichereinrichtung, in der wenigstens eine solche Kenngröße bzgl. des Gargutbehälters abgelegt ist.

Insgesamt bietet die vorliegende Erfindung ein Garsystem 1 mit wenigstens einer Gareinrichtung 3 und wenigstens einem Gargutbehälter 4, welcher eine besonders gleichmäßige Wärmeverteilung aufweist. Das Garsystem 1 ist zudem dazu geeignet, die Temperaturen im Innenbereich des Gargutbehälters 4 durch Erfassung an einer äußeren Wandung 24 des Gargutbehälters 4 zuverlässig zu ermitteln. Die wenigstens eine Heizquelle 2 der Gareinrichtung 3 kann dabei abhängig von der ermittelten Temperatur gesteuert werden, sodass bei einem Garvorgang gewünschte Temperaturen zuverlässig eingehalten werden. Dabei kann die Zuverlässigkeit bzw. die Genauigkeit mit der die Heizquelle gesteuert wird verbessert werden, indem Steuereinrichtung die Heizquelle wenigstens teilweise in Abhängigkeit der von der Sensoreinrichtung erfassten charakteristischen Werte für Temperaturen und in Abhängigkeit wenigstens eines weiteren Parameters, etwa der von der Heizquelle abgegebene Leistung und/oder einer Kenngröße bzgl. des Gargutbehälters, steuert.

### Bezugszeichenliste

- 1: Garsystem
- 2: Heizquelle
- 3: Gareinrichtung
- 4: Gargutbehälter
- 5: Steuereinrichtung
- 6: Sensoreinrichtung
- 7: Hohlraum
- 8: Wärmeübertragungseinrichtung
- 9: thermoakustischer Wärmeüberträger
- 11: Kochfeld
- 12: Kochstelle
- 13: Glaskeramikfeld
- 14: innere Wandung
- 16: Thermopile-Sensor
- 24: äußere Wandung
- 34: Boden
- 44: Seitenwand
- 54: Topf
- 64: Pfanne
- 100: Herd
- 101: Garraum
- 102: Tür
- 103: Bedieneinrichtung
- 104: Umluftheizquelle

## Patentansprüche

1. Garsystem (1) mit wenigstens einer wenigstens eine Heizquelle (2) umfassenden Gareinrichtung (3) und mit wenigstens einem Gargutbehälter (4) zur Aufnahme und Behandlung von Gargut, wobei der Gareinrichtung (3) wenigstens eine Steuereinrichtung (5) zur Steuerung der wenigstens einen Heizquelle (2) und wenigstens eine Sensoreinrichtung (6) zur Erfassung charakteristischer Werte für Temperaturen zugeordnet ist,
**dadurch gekennzeichnet,**
**dass** der Gargutbehälter (4) wenigstens eine wenigstens einen Hohlraum (7) aufweisende Wärmeübertragungseinrichtung (8) umfasst, welche zur Wärmeübertragung zwischen wenigstens einem Bereich einer inneren Wandung (14) des Gargutbehälters (4) und wenigstens einem Bereich einer äußeren Wandung (24) des Gargutbehälters (4) ausgebildet ist, und
**dass** die Sensoreinrichtung (6) dazu geeignet und ausgebildet ist, charakteristische Werte für Temperaturen des Bereichs der äußeren Wandung (24) des Gargutbehälters (4) zu erfassen, und dass die Steuereinrichtung (5) dazu geeignet und ausgebildet ist, die Heizquelle (2) in Abhängigkeit der von der Sensoreinrichtung (6) erfassten charakteristischen Werte zu steuern.

2. Garsystem (1) nach Anspruch 1, **dadurch gekennzeichnet, dass** der Hohlraum (7) wenigstens teilweise zwischen dem Bereich der inneren Wandung (14) und dem Bereich der äußeren Wandung (24) des Gargutbehälters (4) angeordnet ist und insbesondere an die innere und/oder die äußere Wandung (14, 24) angrenzt.

3. Garsystem (1) nach einem der vorhergehenden Ansprüche, **dadurch gekennzeichnet, dass** der Hohlraum (7) wenigstens teilweise im Bereich des Bodens (34) und/oder im Bereich wenigstens einer Seitenwand (44) des Gargutbehälters (4) angeordnet ist.

4. Garsystem (1) nach einem der vorhergehenden Ansprüche, **dadurch gekennzeichnet, dass** der Hohlraum (7) gasdicht verschlossen ist.

5. Garsystem (1) nach einem der vorhergehenden Ansprüche, **dadurch gekennzeichnet, dass** der Hohlraum (7) wenigstens bei Wohnraumtemperatur einen Innendruck aufweist, der geringer als der Umgebungsdruck ist.

6. Garsystem (1) nach einem der vorhergehenden Ansprüche, **dadurch gekennzeichnet, dass** der Hohlraum (7) mit wenigstens einem Medium wenigstens teilweise gefüllt ist und/oder eine den Hohlraum (7) begrenzende Wandung mit wenigstens einem Medium beschichtet ist.

7. Garsystem (1) nach einem der vorhergehenden Ansprüche, **dadurch gekennzeichnet, dass** der Hohlraum (7) wenigstens teilweise als thermoakustischer Wärmeüberträger (9) und/oder wenigstens teilweise als ein Wärmerohr ausgebildet ist.

8. Garsystem (1) nach einem der vorhergehenden Ansprüche, **dadurch gekennzeichnet, dass** die Sensoreinrichtung (6) zur Erfassung von Wärmestrahlung geeignet und ausgebildet ist.

9. Garsystem (1) nach einem der vorhergehenden Ansprüche, **dadurch gekennzeichnet, dass** die Sensoreinrichtung (6) unterhalb des Gargutbehälters (4) angeordnet ist.

10. Garsystem (1) nach einem der vorhergehenden Ansprüche, **dadurch gekennzeichnet, dass** die Gareinrichtung (3) als ein Kochfeld (11) mit wenigstens einer beheizbaren Kochstelle (12) ausgebildet ist.

11. Verfahren zum Betreiben eines Garsystems (1) mit wenigstens einer wenigstens eine Heizquelle (2) umfassende Gareinrichtung (3) und mit wenigstens einem Gargutbehälter (4), wobei der Gareinrichtung (3) wenigstens eine Steuereinrichtung (5) zur Steuerung der wenigstens einen Heizquelle (2) und wenigstens eine Sensoreinrichtung (6) zur Erfassung charakteristische Werte für Temperaturen zugeordnet ist, **dadurch gekennzeichnet, dass** der Gargutbehälter (4) wenigstens eine wenigstens einen Hohlraum (7) aufweisende Wärmeübertragungseinrichtung (8) umfasst, welche Wärme zwischen wenigstens einem Bereich einer inneren Wandung (14) und wenigstens einem Bereich einer äußeren Wandung (24) des Gargutbehälters (4) überträgt, und dass die Sensoreinrichtung (6) charakteristische Werte für Temperaturen des Bereichs der äußeren Wandung (24) des Gargutbehälters (4) erfasst, und dass die Steuereinrichtung (5) die Heizquelle (2) wenigstens teilweise in Abhängigkeit der von der Sensoreinrichtung (6) erfassten charakteristischen Werte steuert.
